Europäisches Patentamt

European Patent Office

Office européen des brevets

(11) Publication number: **0 171 230**
A1

(12) # EUROPEAN PATENT APPLICATION

(21) Application number: 85305264.5

(22) Date of filing: 24.07.85

(51) Int. Cl.⁴: **B 23 K 20/26**, B 23 K 20/02

(30) Priority: 24.07.84 US 633817

(43) Date of publication of application: 12.02.86
Bulletin 86/7

(84) Designated Contracting States: DE FR GB SE

(71) Applicant: THE GARRETT CORPORATION,
9851-9951 Sepulveda Boulevard P.O. Box 92248, Los
Angeles, California 90009 (US)

(72) Inventor: Wan, Chung-Chu, 11829 Laughton Way,
Northridge California (US)
Inventor: Brown, Glenn W., 2836 Vista Mesa, Rancho
Palos Verdes California (US)

(74) Representative: Jennings, Nigel Robin et al, KILBURN &
STRODE 30 John Street, London WC1N 2DD (GB)

(54) Diffusion bonding by hot isostatic pressure.

(57) In a method of diffusion bonding a cladding to a substrate
the cladding 10 is brought into contact with a substrate 12, op-
tionally with interposition of a striker 14, and the seam be-
tween the cladding and the substrate is then sealed by interfer-
ence fitting a cup-shaped isolator 16 over the seam. The entire
workpiece is then submerged in a pressure and energy trans-
mitting medium and subjected to hot isostatic pressing. The
isolating means 16 prevents the energy transmitting medium
gaining access to the interface between the cladding and the
substrate and thus from penetrating between the cladding and
the substrate.

## Diffusion Bonding by Hot Isostatic
## Pressure

The present invention relates to diffusion bonding mechanically held components, in particular bonding a metallic cladding to a metallic substrate and relates more especially to a method of metallurgically bonding a tungsten carbide alloy cladding to a carbon steel substrate.

Surface instability of structural substrates is a significant problem in many advanced industrial and automotive applications. Highly corrosive environments are generated by the combustion process and when these highly corrosive environments are combined with high operating temperatures, limitations arise with respect to the materials which can be successfully used. A further source of surface instability arises in high strength applications in which protective claddings are used in conjunction with otherwise suitable substrates to provide surface protection thereof. The bonding of a corrosion and wear resistant or high strength cladding to a substrate represents a solution to the surface instability problem.

There has been developed a process for accomplishing this desired bonding of two dissimilar metals which is known as hot isostatic pressing (HIPing). The hot isostatic pressing process involves the simultaneous application of pressure and temperature to a workpiece. In essence, the workpiece is squeezed from all sides at elevated temperatures. Generally, a pressure, up to approximately 30,000 psi (2000 bar) is applied by a pressure or energy transmitting medium, i.e. gas or molten inert glass powder or beads. The applied pressure, along with the temperature increase, causes diffusion bonding of the cladding to the substrate. Diffusion bonding is accomplished by holding the two metals to be joined in intimate contact, and thereafter heating the metals to a temperature which will cause diffusion of the atoms of one or both metal parts into the other. When the workpiece is composed of two parts of the same metal, the joint will be substantially undetectable. In the case of different metals the joint will generally be an alloy of the metals with a composition altering progressively from one to the other.

This process provides an ideal mechanism for controlling or totally eliminating porosity or voids which occur during other types of metal joining processes. The simultaneous application of heat and isostatic pressure combines to collapse voids by creep-like mechanisms or compressive plastic deformation and thereby joints the materials by diffusion bonding. The net result is improved reliability and efficiency of materials utilised.

Because of the tendency for most metals to acquire surface films of oxides and other compounds particularly when heated, the metal surfaces must be thoroughly cleaned and the heating must be done in an inert gas or in a vacuum to prevent further oxidation.

However, the hot isostatic pressing process is not without its problems. In some instances, surface-connected porosity prevents complete diffusion bonding of the cladding to the substrate. This porosity has been found to be caused by the presence of the pressure transmitting medium at the cladding-substrate interface.

Several methods have been used to eliminate this problem, see U.S. Patent No. 3,928,901 and 3,952,939 (Schilling, et al) and U.S. Patent No. 3,815,219 (Wilson), which describe metallurgical methods of attaching a sheet cladding to a substrate by preforming the sheet cladding to the substrate and masking the seams therebetween. "Masking" involves the step of either tack welding or vacuum brazing the cladding sheet to the substrate along the seams. It is the function of masking the seams about the cladding-substrate interface to ensure that during hot isostatic pressing the pressure transmitting medium is kept from entering this interface. Generally, a thin nickel plate is used as the braze material and is placed in this interface. The masked assembly is thereafter inserted into a deformable metal container which will collapse under the pressure used when diffusion bonding. The volume of the container is such that the workpiece is completely immersed in a granular, densifying pressure transmitting medium. The container is then sealed and degassed. Previously only metallurgical methods of sealing the cladding-substrate seam from the energy transmitting medium during hot isostatic pressure were known.

It is an object of the present invention to provide an improved method of diffusion bonding of a cladding to a substrate.

It is another object of the invention to prevent penetration of the energy transmitting medium into the cladding-substrate interface during hot isostatic pressing without welding or brazing of the interface, through the use of an easy to use cladding-substrate seam isolation method and structure.

It is a further object to provide a mechanical means and method of isolating the cladding-substrate interface.

According to the present invention there is provided a method of diffusion bonding a cladding to a substrate in which the cladding and the substrate are brought into contact and subjected to hot isostatic pressing by means of an energy transmitting medium, which method is characterised in that prior to the hot isostatic pressing the seam between the cladding and the substrate is surrounded by a mechanical means which substantially isolates the seam from the energy transmitting medium. In the preferred form of the invention the isolating means is interference fitted about the seam whereby the energy transmitting medium is substantially prevented from penetrating the seam.

Thus the method of the present invention eliminates the expensive and time-consuming step of either tack welding or brazing the cladding to the substrate before subjecting the assembly to hot isostatic pressing. In the preferred embodiment the isolating means comprises a substantially cup-shaped member having an open end and a closed end and defining a cavity therein. The cup-shaped member snugly secures the cladding/substrate assembly together and isolates the cladding/substrate seam by preventing the energy transmitting medium from coming into contact with the seam and thus from penetrating into the cladding/substrate interface during hot isostatic pressing.

It is preferred that the isolating means has a melting temperature greater than that of the cladding and the substrate and it is also preferred that the isolating means, which is preferably made of stainless steel, has a coefficient of thermal expansion less than or substantially equal to that of the cladding and substrate.

The cladding and substrate may be placed directly in contact but it is preferred that they are indirectly in contact and that the method includes placing a strike plate, e.g. of a nickel alloy, between the cladding and the substrate. In the most preferred embodiment the isolating means comprises a stainless steel alloy, the cladding is made of a tungsten carbide alloy and the substate is made of carbon steel.

In one specific embodiment the substrate is a diesel engine valve lifter cap plate including an oblong cylindrical body portion which expands radially into a cap plate having a diameter larger than the diameter of the body portion, the cladding is preformed into the shape of the cap plate and the isolation means is generally cylindrical and sized to be an interference fit over the cladding and the substrate.

It is preferred that after the isolating means has been positioned around the cladding and the substrate the resulting workpiece is submerged into the pressure transmitting medium which is contained within a deformable container and the container and the workpiece are subjected to hot isostatic pressing conditions. It is preferred that the container is also degassed and sealed.

The present invention also embraces an isolator for placing, more particularly interference fitting, around the seam between a cladding and a substrate prior to diffusion bonding them together by hot isostatic pressing.

Further features and details of the present invention will be apparent from the following description of two specific embodiments which is given by way of example with reference to the accompanying drawings, in which:-

Fig. 1 is a side elevational view of a seam isolation device and cladding-substrate, before assembly ;

Fig. 2 is a typical temperature-pressure-time graph when hot isostatic pressing according to the present invention; and

Fig. 3 is a side elevational view of a tested alternative seam isolation device.

A cladding 10 and a substrate 12 are firstly thoroughly cleaned in order to remove any components detrimental to diffusion bonding. The cladding is then preformed to the substrate, i.e. the two surfaces to be diffusively bonded are made complements of each other. Flat surfaces are generally preferred. The interfacing surfaces of the cladding and substrate can be separated with a thin nickel plate 14 and subjected to a vacuum heat treatment. Once the cladding and substrate are preformed and assembled, a seam isolator or mechanical holding device 16 is positioned in such a way that it lies across the seam between the cladding and the substrate and resists the flow of the energy transmission medium, whether in a solid or molten state, from entering the seam area.

The seam isolator comprises a generally cylindrical cup-shaped member 16 defining a cavity 20 therein and having a top portion or closed end 18 and an open end 22. The internal surface 24 of the isolator is an interference fit about the workpiece (10, 12 and 14) and therefore isolates the cladding-substrate interface from the energy transmitting medium. In addition, an optional annular shoulder 26 encircles the open end 22 of the seam isolator in order to provide an engagement means for use during assembly and disassembly of the seam isolator and the workpiece. The isolator is preferably made of a stainless steel but can be formed of any material which has a melting temperature above that of the materials of the substrate and cladding and has a coefficient of thermal expansion less than or substantially equal to that of substrate and cladding.

The interference fit between the seam isolator and the workpiece is such that the pressure transmitting medium, e.g. molten glass, resists penetration any significant distance into the isolator/workpiece interface and therefore does not reach the substrate-cladding seam.

This assembly is then inserted into a deformable metal container which is collapsible under pressure which produce diffusion bonding. The volume of the deformable container is such that the cladding-substrate assembly may be completely immersed in a granular, densifying pressure transmitting medium with sufficient clearances about the assembly edges such that during the diffusion bonding process none of the assembly edges will pierce the container when collapsed. Glass beads or chips are preferred as the pressure transmitting medium because the glass will densify and become molten at diffusion bonding temperatures to provide an optimum isostatic pressure transmitting medium. Moreover, glass is relatively inert, easily degassed and can be easily removed from the surface of the assembly after the diffusion bonding step.

After the container is filled with both the cladding-substrate assembly and the pressure transmitting medium, the container is degassed and sealed. "Degassing" requires that the chamber within the container be connected to a suitable vacuum pump for removal of gaseous reaction products produced therein during heating. This is accomplished by hot evacuation of the entire assembly followed by a forge-weld seal-off from the vacuum system. If degassing is not provided for, the resulting bond may be characterised by the presence of detrimental oxides and other impurities which may adversely affect the quality of the diffusion bond.

The sealed container is placed into a hot gas autoclave (hot isostatic press) for diffusion bonding at appropriate temperatures and pressures. Fig. 2 shows the time-temperature-pressure graph for a typical bonding cycle for bonding a tungsten carbide cladding to a carbon steel substrate, though the temperature and pressure used during the diffusion bonding step are dependent upon the materials to be bonded. The temperature is indicated by the solid line and the pressure by the chain line. The magnitude of the pressure is indicated in both KSI ( thousands of psi)and bar. Considerable care is taken to avoid high pressures of e.g. 7 KSI (7000 psi)(466.7 bar) before the transmitting medium has softened. The application of high pressure before the glass chips have softened can cause a poor surface finish.

After diffusion bonding of the cladding to the substrate, the assembly is removed from the deformable container and the glass which has adhered to the surfaces of the bonded cladded-substrate assembly is removed by

0171230

-9-

sandblasting or by subsequent vacuum heating and water quenching of the assembly. Thereafter, the bonded cladding-substrate assembly may be subjected to a final heat treatment, if required.

The seam isolator is removed after hot isostatic pressing by one of two methods. Depending on the materials being bonded and the material used as the seam isolator, the isolator may become partially diffusion bonded to the workpiece. In this case, the seam isolator is grounded off the workpiece. However under normal conditions the interference fit between the isolator and the workpiece can be overcome by pressing the isolator out of engagement with the workpiece.

EXAMPLE

A carbon steel substrate having a melting temperature of approximately $2750^{\circ}F$ and in a machined condition to be used as a diesel engine valve lifter cap plate was chemically cleaned using a trichloroethylene solution. A thin nickel plate called a strike, .005 to .015 inches (0.127 to 0.381mm) thick, was placed on it and a cladding of a tugsten carbide alloy having a melting temperature of approximately $3410^{\circ}F$ (1876ºC) and about .060 $\pm$ .005 inches (1.524 $\pm$ 0.127mm) in thickness was placed over the nickel plate. The preformed cladding was cleaned using a fine grit emery paper and then rinsed in acetone before being placed on the nickel plate.

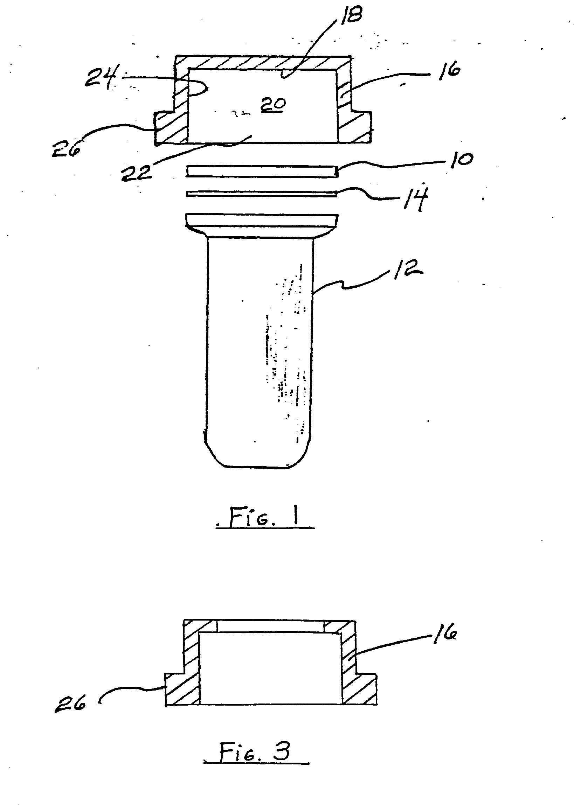

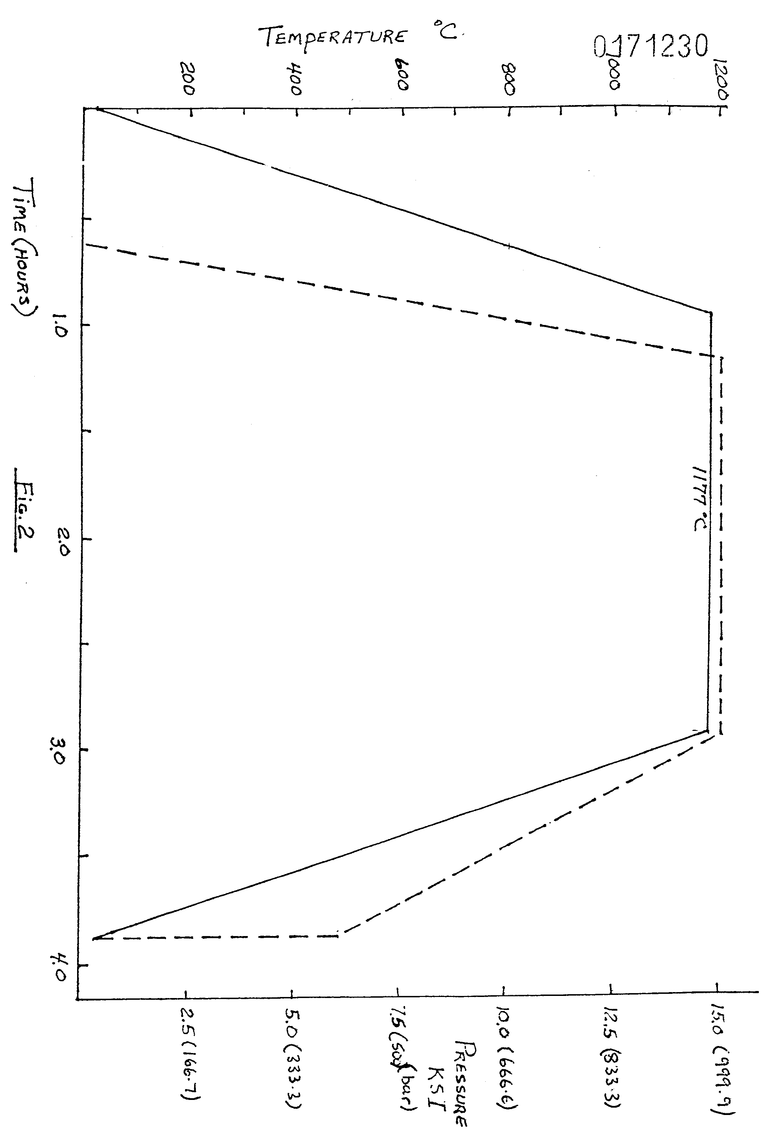

Once the cladding and nickel plate were positioned on the substrate, a seam isolator or mechanical holding and sealing device having a wall thickness of .030 inches (0.762mm), was interference fitted over the cladding, nickel plate and a portion of the substrate such that it held these components together. One design of the sealing device as tested is shown in Fig. 1, while the second design is shown in Fig. 3. The second design is substantially the same as the first except that the top portion was substantially eliminated thereby resulting in a sleeve-like structure. Both devices were shaped such that their cylindrical side wall lay across the joint to be bonded and prevented the flow of the energy transmitting medium from contacting the seams or joint area. It is of importance that the energy transmission medium had sufficient viscosity to resist entering the narrow opening between the mechanical holding device and the substrate.

Fig. 2 shows a temperature-pressure-time graph as was used in the present example. Starting at ambient temperature, the temperature was raised at a rate of $20^{O}C$ per minute to approximately $1177^{O}C$. Temperature is held at that level for two hours before lowering the temperature at $20^{O}C$ per minute back to ambient. Pressurisation of the contained started when the temperature reached $800^{O}C$ and the pressure was raised to 15,000 psi (1000 bar) in 30 minutes simultaneous with the temperature rise. The pressure level fell with the decrease in temperature and was vented when the temperature reached the ambient temperature.

After removal of the seam isolator, examination of the workpieces showed that the pressure transmitting medium had not penetrated into the cladding-substrate seam of the workpieces sealed by the seam isolator as shown in Fig. 1 while the design of Fig. 3 allowed only slight penetration of the medium into the cladding-substrate seam.

While the invention has been discussed with reference to a diesel engine valve lifter cap plate it is equally useful in other applications requiring diffusion bonding of a cladding to a substrate using    hot isostatic pressing.

CLAIMS

1.  A method of diffusion bonding a cladding to a substrate in which the cladding and the substrate are brought into contact and subjected to hot isostatic pressing by means of an energy transmitting medium characterised in that prior to the hot isostatic pressing the seam between the cladding (10) and the substrate (12) is surrounded by a mechanical means (16) which substantially isolates the seam from the energy transmitting medium.

2.  A method as claimed in claim 1 characterised in that the isolating means (16)  is interference fitted about the seam whereby the energy transmitting medium is substantially prevented from penetrating the seam.

3.  A method as claimed in claim 1 or claim 2 characterised in that the isolating means comprises a substantially cup-shaped member (16) having an open end (22) and a closed end (18) and defining a cavity (20) therein.

4.  A method as claimed in any one of the preceding claims characterised in that the isolating means (16) has a melting temperature greater than that of the cladding (10) and the substrate (12).

5.  A method as claimed in any one of the preceding claims characterised by placing a strike plate (14) between the cladding (10) and the substrate (12).

6.  A method as claimed in any one of the preceding claims characterised in that the isolating means (16) comprises a stainless steel alloy, the cladding (10) is made of a tungsten carbide alloy and the substrate (12) is made of carbon steel.

7. A method as claimed in any one of the preceding claims characterised in that the substrate (12) is a diesel engine valve lifter cap plate including an oblong cylindrical body portion which expands radially into a cap plate having a diameter larger than the diameter of the body portion, that the cladding (10) is preformed into the shape of the cap plate and that the isolation means (16) is generally cylindrical and sized to be an interference fit over the cladding and the substrate.

8. A method as claimed in any one of the preceding claims characterised in that after the isolating means (16) has been positioned around the cladding (10) and the substrate (12) the resulting workpiece is submerged into the pressure transmitting medium which is contained within a deformable container and the container and the workpiece are subjected to hot isostatic pressing conditions.

9. A method as claimed in claim 8 characterised by the steps of degassing and sealing the container.

10. An isolator for placing around the seam between a cladding and a substrate prior to diffusion bonding them together by hot isostatic pressing, the isolator comprising a substantially cup-shaped member having an open end and a closed end.

.Fig. 1

Fig. 3

2/2

Fig. 2

**European Patent Office**

Application number

EP 85 30 5264

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 042 393 (GENERAL ELECTRIC CO.)<br>* page 1, lines 89-107 * | 1 | B 23 K 20/26<br>B 23 K 20/02 |
| A | PATENT ABSTRACTS OF JAPAN, vol. 6, no. 204 (M-164)[1082], 15th October 1982; & JP - A - 57 109 585 (TANAKA KIKINZOKU KOGYO K.K.) 08-07-1982 | 1 | |
| A | SOVIET INVENTIONS ILLUSTRATED, Week K34, 5th October 1983, abstract no. 83-746038/34, Derwent Publications Ltd., London, GB; & SU - A - 967 739 (UFA AVIATION INST.) 23-10-1982 | 1 | |

TECHNICAL FIELDS SEARCHED (Int. Cl.4)

B 23 K 20/00

The present search report has been drawn up for all claims

| Place of search | Date of completion of the search | Examiner |
|---|---|---|
| BERLIN | 22-10-1985 | WUNDERLICH J E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82